(19) Europäisches Patentamt
European Patent Office
Office européen des brevets

(11) **EP 4 153 951 B1**

(12) **EUROPÄISCHE PATENTSCHRIFT**

(45) Veröffentlichungstag und Bekanntmachung des Hinweises auf die Patenterteilung:
**22.05.2024   Patentblatt 2024/21**

(21) Anmeldenummer: **21722162.1**

(22) Anmeldetag: **23.04.2021**

(51) Internationale Patentklassifikation (IPC):
**G01F 1/84** *(2006.01)*    **G01F 15/18** *(2006.01)*
**G01N 9/00** *(2006.01)*    **G01F 15/02** *(2006.01)*

(52) Gemeinsame Patentklassifikation (CPC):
**G01F 1/8477; G01F 1/8436; G01F 1/8486;
G01F 1/8495; G01F 15/02; G01N 9/002;**
G01F 15/185; G01N 2009/006

(86) Internationale Anmeldenummer:
**PCT/EP2021/060717**

(87) Internationale Veröffentlichungsnummer:
**WO 2021/233644 (25.11.2021 Gazette 2021/47)**

(54) **VERFAHREN ZUM BESTIMMEN EINES DICHTEMESSWERTS ODER EINES MESSWERTS EINER DICHTEABHÄNGIGEN MESSGRÖSSE UND CORIOLIS-MASSEDURCHFLUSSMESSGERÄT ZUR DURCHFÜHRUNG DES VERFAHRENS**

METHOD FOR DETERMINING A DENSITY MEASUREMENT VALUE OR A MEASUREMENT VALUE OF A DENSITY-DEPENDENT MEASURAND, AND CORIOLIS MASS FLOWMETER FOR PERFORMING THE METHOD

PROCÉDÉ DE DÉTERMINATION D'UNE VALEUR DE MESURE DE DENSITÉ OU D'UNE VALEUR DE MESURE D'UN MESURANDE DÉPENDANT DE LA DENSITÉ, ET DÉBITMÈTRE MASSIQUE CORIOLIS PERMETTANT LA MISE EN OEUVRE DU PROCÉDÉ

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **20.05.2020   DE 102020113762**

(43) Veröffentlichungstag der Anmeldung:
**29.03.2023   Patentblatt 2023/13**

(73) Patentinhaber: **Endress + Hauser Flowtec AG
4153 Reinach (CH)**

(72) Erfinder: **ZHU, Hao
85354 Freising (DE)**

(74) Vertreter: **Hahn, Christian
Endress+Hauser Group Services
(Deutschland)AG +Co. KG
Colmarer Straße 6
79576 Weil am Rhein (DE)**

(56) Entgegenhaltungen:
**DE-A1-102012 109 729      DE-A1-102012 109 729
DE-A1-102015 104 931      DE-A1-102015 104 931
DE-A1-102016 112 002      DE-A1-102016 112 002
US-A1- 2019 128 719      US-A1- 2019 128 719**

## Beschreibung

Die vorliegende Erfindung betrifft ein Verfahren zum Bestimmen eines Messwerts mindestens einer Messgröße, die ausgewählt ist aus einer Gruppe von Messgrößen, die einen effektiven Dichtemesswert $\rho_{eff}$, und eine dichteabhängige Messgröße eines strömenden Mediums umfasst, mittels eines Coriolis-Massedurchflussmessgeräts mit zwei Oszillatoren die jeweils zwei Messrohre aufweisen, wobei die Messrohre der beiden Oszillatoren jeweils paarweise gegeneinander schwingen, wobei die vier Messrohre strömungstechnisch parallel angeordnet sind und einlaufseitig sowie auslaufseitig in einem Sammler zusammengefasst sind. Die dichteabhängige Messgröße kann dabei insbesondere den Volumendurchfluss umfassen. Die Volumendurchflussmessung mit einem Coriolis-Massedurchflussmessgerät, welches nur zwei Messrohre aufweist, die zu einem Oszillator gekoppelt sind, ist beispielsweise in DE 693 14 780 T2 offenbart, wobei ein Massedurchflussratenmesswert durch einen Dichtemesswert geteilt wird, um einen Wert für die zugehörige Volumendurchflussrate zu erhalten. Solange ein Messumformer nur einen Oszillator zum Ermitteln der Massedurchflussrate und der zugehörigen Dichte aufweist, ist der Weg zur Ermittlung der Volumendurchflussrate vorgegeben. Wenn jedoch mehrere parallel geschaltete Strömungspfade mit jeweils einem Oszillator vorhanden sind, ist zu klären, wie unterschiedliche Dichtemesswerte aus den parallelen Strömungspfaden zu gewichten sind, insbesondere dann, wenn größere Asymmetrien zwischen den Massedurchflussraten einhergehend mit unterschiedlichen Dichten auftreten.

In DE 10 2016 112 002A1 wird ein Messgerät mit zwei parallel geschalteten Strömungspfaden betrachtet, wobei die Strömungspfade jeweils einen Oszillator mit zwei parallelen Messrohren umfassen. Dichteabweichungen zwischen den parallelen Strömungspfaden werden jedoch nicht betrachtet. Stattdessen geht es dort um die Korrektur von Messfehlern aufgrund des bei kompressiblen Medien auftretenden Resonatoreffekts. Diese Korrektur erfordert Dichtemessungen bei zwei unterschiedlichen Frequenzen. DE 10 2016 112 002A1 lehrt, die größere Zahl von Kombinationsmöglichkeiten unterschiedlicher Frequenzen auszunutzen, die bei zwei Oszillatoren gegeben ist. Dieser Ansatz beruht jedoch auf der Annahme einheitlicher Dichte in beiden Strömungspfaden, wenn in die Berechnung der Korrektur Frequenzen unterschiedlicher Oszillatoren eingehen.

Es ist daher die Aufgabe der vorliegenden Erfindung, ein Verfahren zum Ermitteln eines repräsentativen Dichtewerts bzw. eines Messwerts einer dichteabhängigen Messgröße wie einer Volumendurchflussrate über den gesamten Durchflussbereich sowie ein Coriolis-Massedurchflussmessgerät zum Durchführen des Verfahrens bereitzustellen. Die Aufgabe wird erfindungsgemäß gelöst durch das Verfahren gemäß dem unabhängigen Patentanspruch 1 und das Coriolis-Massedurchflussmessgerät nach dem unabhängigen Anspruch 12.

Das erfindungsgemäße Verfahren dient zum Bestimmen eines Messwerts mindestens einer Messgröße, die ausgewählt ist aus einer Gruppe von Messgrößen, die einen effektiven Dichtemesswert $\rho_{eff}$, und eine dichteabhängige Messgröße eines strömenden Mediums umfasst, mittels eines Coriolis-Massedurchflussmessgeräts mit zwei Oszillatoren die jeweils zwei Messrohre aufweisen, wobei die Messrohre der beiden Oszillatoren jeweils paarweise gegeneinander schwingen, wobei die vier Messrohre strömungstechnisch parallel angeordnet sind und einlaufseitig sowie auslaufseitig in einem Sammler zusammengefasst sind, wobei das Verfahren die folgenden Schritte aufweist: Erfassen eines ersten Massedurchflussratenteilmesswerts $\dot{m}_1$ einer ersten Teilströmung durch die Messrohre des ersten Oszillators und eines zweiten Massedurchflussratenteilmesswerts $\dot{m}_2$ einer zweiten Teilströmung durch die Messrohre des zweiten Oszillators, wobei die Summe der beiden Massedurchflussratenteilmesswerte einen Massedurchflussratengesamtmesswert ergibt;

Erfassen eines ersten Dichteteilmesswert $\rho_1$ des Mediums in der ersten Teilströmung und eines zweiten Dichteteilmesswert $\rho_2$ des Mediums in der zweiten Teilströmung; und

Berechnen des effektiven Dichtemesswert $\rho_{eff}$ in Abhängigkeit von den beiden Dichteteilmesswerten $\rho_1$, $\rho_2$ mit von den Massedurchflussratenteilmesswerten $\dot{m}_1$, $\dot{m}_2$ abhängigen Gewichtungen,

dadurch gekennzeichnet, dass in Abhängigkeit von den Massedurchflussratenteilmesswerten verschiedene Gewichtungsfunktionen zur Ermittlung der Gewichtungen eingesetzt werden.

Nach einer ersten Weiterbildung der Erfindung wird der effektive Dichtemesswert $\rho_{eff}$ mit mindestens einer ersten Gewichtungsfunktion der Dichteteilmesswerte berechnet, wenn ein Betrag des Massedurchflussratengesamtmesswerts kleiner als ein erster Grenzwert ist. In einer Ausgestaltung dieser Weiterbildung beträgt der erste Grenzwert nicht mehr als 4% beispielsweise nicht mehr als 3% und insbesondere nicht mehr als 2% des Messbereichs des Massedurchflussmessgeräts, wobei der erste Grenzwert nach dieser Ausgestaltung nicht weniger als 0,1% insbesondere nicht wenigere als 0,2% des Messbereichs beträgt.

In einer Weiterbildung der Erfindung umfasst die erste Gewichtungsfunktion einen arithmetischen Mittelwert des ersten Dichteteilmesswerts $\rho_1$ und des zweiten Dichteteilmesswerts $\rho_2$. Durch Verwendung dieser Gewichtungsfunktion wird die Dichtebestimmung robuster gegenüber Durchflussratenschwankungen bei kleinen Durchflussraten.

In einer Weiterbildung der Erfindung wird der

effektive Dichtemesswert $\rho_{eff}$ mit mindestens einer zweiten Gewichtungsfunktion der Dichteteilmesswerte berechnet, wenn nur ein Massedurchflussratenteilmesswert kleiner als ein zweiter Grenzwert ist.

In einer Ausgestaltung dieser Weiterbildung der Erfindung ist der zweite Grenzwert kleiner als der erste Grenzwert und beträgt insbesondere nicht mehr als die Hälfte des ersten Grenzwerts.

In einer Weiterbildung der Erfindung gewichtet die zweite Gewichtungsfunktion den zum größeren Massedurchflussratenteilmesswert gehörigen Dichteteilmesswert mit x und den kleineren der beiden Dichteteilmesswerte mit 1-x, wobei x > 2/3, insbesondere x > 3/4. In einer Ausgestaltung dieser Weiterbildung der Erfindung gilt: x = 1.

In einer Weiterbildung der Erfindung wird der effektive Dichtemesswert $\rho_{eff}$ mit einer dritten Gewichtungsfunktion berechnet, wenn der Betrag des Massedurchflussratengesamtmesswerts nicht kleiner als der erste Grenzwert ist, und wenn keiner der Massedurchflussratenteilmesswerte kleiner als der zweite Grenzwert ist. Nach einer Ausgestaltung dieser Weiterbildung der Erfindung ist der mit der dritten Gewichtungsfunktion berechnete effektive Dichtemesswert $\rho_{eff}$ gleich einem Standarddichtewert $\rho_{standard}$, wobei der Standarddichtewert $\rho_{standard}$ zu berechnen ist gemäß:

$$\rho_{standard} = \frac{\dot{m}_1 + \dot{m}_2}{\dfrac{\dot{m}_1}{\rho_1} + \dfrac{\dot{m}_2}{\rho_2}}$$

In einer Weiterbildung der Erfindung umfasst die dichteabhängige Messgröße eine Volumendurchflussrate v, die berechnet wird gemäß:

$$\dot{V} = \frac{\dot{m}}{\rho_{eff}},$$

wobei $\dot{m}$ der Massedurchflussratengesamtmesswert die Summe der beiden Massendurchflussratenteilmesswerte $\dot{m}_1$, $\dot{m}_2$ ist.

Das erfindungsgemäße Coriolis-Massedurchflussmessgerät umfasst:

eine Mess- und Betriebsschaltung; und
zwei Oszillatoren die jeweils zwei Messrohre aufweisen, wobei die Messrohre der beiden Oszillatoren jeweils paarweise gegeneinander schwingen, wobei die vier Messrohre strömungstechnisch parallel angeordnet sind und einlaufseitig sowie auslaufseitig in einem Sammler zusammengefasst sind, wobei die Oszillatoren jeweils mindestens zwei Schwingungssensoren zum Erfassen von Schwingungen der Messrohre und einen Erreger zum Anregen der Schwingungen aufweisen;
wobei die Mess- und Betriebsschaltung dazu eingerichtet ist, die Erreger zu treiben, Signale der Schwingungssensoren zu erfassen, und das erfindungsgemäße Verfahren durchzuführen.

Die Erfindung wird nun anhand des in den Zeichnungen dargestellten Ausführungsbeispiels näher erläutert. Es zeigt:

Fig. 1: eine schematische Darstellung eines Ausführungsbeispiels eines erfindungsgemäßen Coriolis-Massedurchflussmessgerätes im Längsschnitt;
Fig. 2a: ein Flussdiagramm eines Ausführungsbeispiels des erfindungsgemäßen Verfahrens; und
Fig. 2b: ein detailliertes Flussdiagramm eines Verfahrensschritts des Ausführungsbeispiels des erfindungsgemäßen Verfahrens aus Fig. 2a.

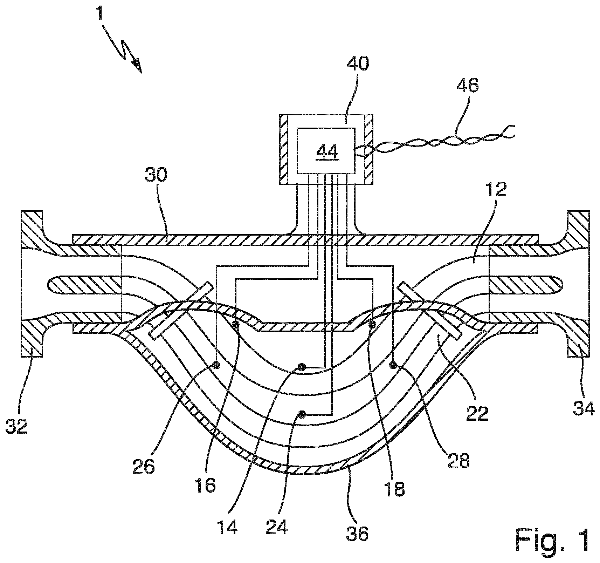

Das in Fig 1 dargestellte Ausführungsbeispiel eines erfindungsgemäßen Coriolis-Massedurchflussmessgerätes 1 umfasst einen ersten Oszillator 12 mit zwei gebogenen Messrohren, deren Messrohrmittellinien in zwei zueinander parallelen Ebenen verlaufen, wobei eine orthogonale Projektion der Messrohrmittellinie eines der Messrohre auf die Ebene der Messrohrmittellinie des anderen Messrohrs mit der Messrohrmittellinie des anderen Messrohrs zusammenfällt. Der erste Oszillator 12 weist weiterhin einen ersten elektrodynamischen Erreger 14 auf, der zwischen den beiden Messrohren des ersten Oszillators wirkt, um diese zu Biegeschwingungen anzutreiben. Der erste elektrodynamische Erreger 14 kann, bezogen auf die Längsrichtung der Messrohre, insbesondere in der Mitte bzw. im Scheitel der Messrohrbögen angeordnet sein. Weiterhin umfasst der erste Oszillator 12 einen ersten einlaufseitigen elektrodynamischen 16 und einen ersten auslaufseitigen elektrodynamischen Schwingungssensor 18, die jeweils die Relativbewegungen der Messrohre des ersten Oszillators 12 zueinander erfassen. Das Coriolis-Massedurchflussmessgerät 1 umfasst weiterhin einen zweiten Oszillator 22 mit zwei gebogenen Messrohren, deren Messrohrmittellinien in zwei zueinander parallelen Ebenen verlaufen, wobei die orthogonale Projektion der Messrohrmittellinie eines der Messrohre auf die Ebene der Messrohrmittellinie des anderen Messrohrs mit der Messrohrmittellinie des anderen Messrohrs zusammenfällt. Der zweite Oszillator 22 weist weiterhin einen zweiten elektrodynamischen Erreger 24 auf, der zwischen den beiden Messrohren des zweiten Oszillators wirkt, um diese zu Biegeschwingungen anzutreiben. Der zweite elektrodynamische Erreger 24 kann, bezogen auf die Längsrichtung der Messrohre, insbesondere in der Mitte bzw. im Scheitel der Messrohrbögen angeordnet sein. Weiterhin umfasst der zweite Oszillator 22 einen zweiten einlaufseitigen elektrodynamischen Schwingungssensor 26 und einen zweiten auslaufseitigen elektrodynamischen Schwingungssensor 28, die jeweils die Relativbewegungen der Messrohre des zweiten Oszillators 22 zueinander erfassen. Der erste Oszillator 12 und der zweite Oszillator 22 haben insbesondere zwei gemeinsame Ebenen, in denen die Messrohrmittenlinien verlaufen. Die vier Messrohre der beiden Oszillatoren sind strömungstechnisch parallel angeordnet, wobei die einlaufseitig mit einem ersten Sammler 32 und auslaufseitig mit einem zweiten Sammler 34 zusammengefasst sind. Die Sammler 32, 34 weisen zudem jeweils einen Flansch zur Montage des Coriolis-Massedurchflussmessgerätes 1 in einer Rohrleitung auf. Die Sammler 32, 34 sind durch ein massives Trägerrohr 30 miteinander verbunden, um Relativbewegungen der Sammler zueinander zu unterdrücken. Die außerhalb des Trägerrohrs 30 verlaufenden Bögen der Messrohre sind von einer Gehäusekappe 36 überdeckt, die entlang eines umlaufenden Randes mit dem Trägerrohr verbunden ist, um die Messrohre der beiden Oszillatoren 12, 22 einzuhausen. Das Coriolis-Massedurchflussmessgerät 1 weist weiterhin ein Elektronikgehäuse 40 auf, in dem eine Mess- und Betriebsschaltung 44 angeordnet ist, welche mit den einlaufseitigen Sensoren 16, 26, den auslaufseitigen Sensoren 18, 28 und den Erregern 14, 24 verbunden ist, um die Erreger 14, 24 zu treiben, Signale der Schwingungssensoren 16, 18, 26, 28 zu erfassen, und das erfindungsgemäße Verfahren durchzuführen, wie im Folgenden erläutert wird. Die Mess- und Betriebsschaltung 44 ist über eine Leitung 46 an ein Leitsystem angeschlossen, von dem sie mit Energie versorgt wird, und an das es die ermittelten Messwerte ausgibt.

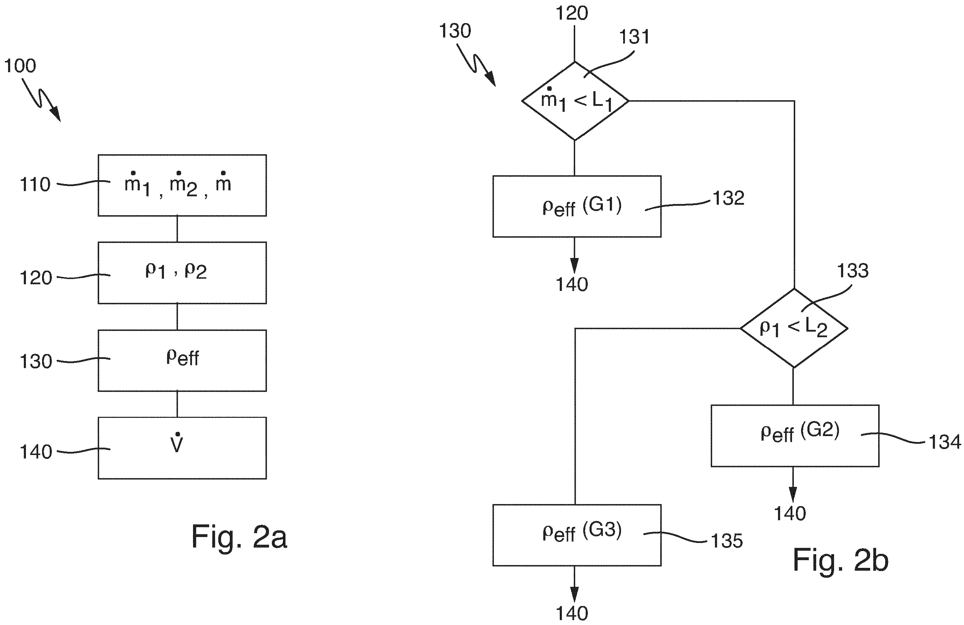

Das in Fig. 2a und Fig. 2b dargestellte Ausführungsbeispiel des erfindungsgemäßen Verfahrens 100 beginnt mit dem Erfassen 110 eines ersten Massedurchflussratenteilmesswerts $\dot{m}_1$ einer ersten Teilströmung durch die Messrohre des ersten Oszillators und eines zweiten Massedurchflussratenteilmesswerts $\dot{m}_2$ einer zweiten Teilströmung durch die Messrohre des zweiten Oszillators, was jeweils auf Basis einer Phasenbeziehung bzw. eines Zeitverzugs zwischen den Sensorsignalen jeweils eines Oszillators und jeweils einem oszillatorspezifischen Kalibrierfaktor erfolgt.

Die Summe der beiden Massedurchflussratenteilmesswerte $\dot{m}_1$, $\dot{m}_2$ entspricht einem Massedurchflussratengesamtmesswert $\dot{m}$;

Es folgt das Erfassen eines ersten Dichteteilmesswerts $\rho_1$ des Mediums in der ersten Teilströmung und eines zweiten Dichteteilmesswerts $\rho_2$ des Mediums in der zweiten Teilströmung 120. Hierzu werden für die beiden Oszillatoren jeweils eine Resonanzfrequenz mindestens einer Biegeschwingungsmode der beiden Oszillatoren ermittelt, um auf deren Basis jeweils einen Dichteteilmesswert für das Medium in den Messrohren des Oszillators zu ermitteln.

Anschließend erfolgt das Berechnen des effektiven Dichtemesswerts $\rho_{eff}$ in Abhängigkeit von den beiden Dichteteilmesswerten $\rho_1$, $\rho_2$ mit von den Massedurchflussratenteilmesswerten $\dot{m}_1$, $\dot{m}_2$ abhängigen Gewichtungen 130, wobei in Abhängigkeit von den Massedurchflussratenteilmesswerten verschiedene Gewichtungsfunktionen zur Ermittlung der Gewichtungen eingesetzt werden. Einzelheiten dazu werden weiter unten im Zusammenhang mit Fig. 2b erläutert.

Abschließend wird auf Basis des Massedurchflussratengesamtmesswerts $\dot{m}$ und des effektive Dichtemesswerts $\rho_{eff}$ eine Volumendurchflussrate v berechnet (140) gemäß:

$$\dot{V} = \frac{\dot{m}}{\rho_{eff}}.$$

Die solchermaßen ermittelte Volumendurchflussrate v kann wie auch die anderen ermittelten Messwerte an ein Leitsystem ausgegeben werden.

Anhand von Fig. 2b wird nun erläutert, mit welchen Gewichtungsfunktionen der effektive Dichtemesswert berechnet wird, und wie diese Gewichtungsfunktionen ausgewählt werden.

In einem ersten Teilschritt (131) wird überprüft, ob der Betrag des Massedurchflussratengesamtmesswerts $\dot{m}$ kleiner als ein erster Grenzwert L1 ist. Der erste Grenzwert L1 kann beispielsweise 2% des Messbereichs des Coriolis-Massedurchflussmessgeräts betragen, also 2% der maximalen Massedurchflussrate, für die das Gerät spezifiziert ist.

Bei einem positiven Ergebnis wird der effektive Dichtemesswert mit einer ersten Gewichtungsfunktion (G1) bestimmt (132). Die erste Gewichtungsfunktion (G1) umfasst die Bildung eines arithmetischen Mittelwert des ersten Dichteteilmesswerts $\rho_1$ und des zweiten Dichteteilmesswerts $\rho_2$, also $\rho_{eff} = (\rho_1 + \rho_2)/2$.

Bei einem negativen Ergebnis wird in einem zweiten Test überprüft, ob genau einer der Massedurchflussratenteilmesswerte kleiner als ein zweiter Grenzwert L2 ist (133). Wobei derzeit bevorzugt gilt L2 = L1 / 2.

Bei einem positiven Ergebnis dieses zweiten Tests wird der effektive Dichtemesswert $\rho_{eff}$ mit einer zweiten Gewichtungsfunktion G2 der Dichteteilmesswerte $\rho_1$, $\rho_2$ berechnet (134), wobei die zweite Gewichtungsfunktion G2 den zum größeren Massedurchflussratenteilmesswert gehörigen Dichteteilmesswert mit x gewichtet und den kleineren der beiden Dichteteilmesswerte mit 1-x, wobei x > 2/3, insbesondere x > 3/4. x kann dabei insbesondere den Wert 1 annehmen. Bei dieser Wahl für den Parameter X wird der effektive Dichtemesswert $\rho_{eff}$ mit dem Dichteteilmesswert identifiziert, der zum größeren Massedurchflussratenteilmesswert gehört.

Bei einem negativen Ergebnis des zweiten Tests wird der effektive Dichtemesswert $\rho_{eff}$ mit einer dritten Gewichtungsfunktion G3 berechnet (135). Der mit der dritten Gewichtungsfunktion berechnete effektive Dichtemesswert $\rho_{eff}$ ist gleich einem Standarddichtewert $\rho_{standard}$, wobei der Standarddichtewert $\rho_{standard}$ zu berechnen ist gemäß:

$$\rho_{standard} = \frac{\dot{m}_1 + \dot{m}_2}{\dfrac{\dot{m}_1}{\rho_1} + \dfrac{\dot{m}_2}{\rho_2}}$$

Der effektive Dichtemesswert $\rho_{eff}$ kann mit der obigen Gleichung für den Standarddichtewert berechnet werden, aber auch mittels anderer äquivalenter Gleichungen die zum gleichen Ergebnis führen.

**Patentansprüche**

1. Verfahren (100) zum Bestimmen eines Messwerts mindestens einer Messgröße, die ausgewählt ist aus einer Gruppe von Messgrößen, die einen effektiven Dichtemesswert $\rho_{eff}$, und eine dichteabhängige Messgröße eines strömenden Mediums umfasst, mittels eines Coriolis-Massedurchflussmessgeräts mit zwei Oszillatoren die jeweils zwei Messrohre aufweisen, wobei die Messrohre der beiden Oszillatoren jeweils paarweise gegeneinander schwingen, wobei die vier Messrohre strömungstechnisch parallel angeordnet sind und einlaufseitig sowie auslaufseitig jeweils in einem Sammler zusammengefasst sind, wobei das Verfahren die folgenden Schritte aufweist:

   Erfassen (110) eines ersten Massedurchflussratenteilmesswerts $\dot{m}_1$ einer ersten Teilströmung durch die Messrohre des ersten Oszillators und eines zweiten Massedurchflussratenteilmesswerts $\dot{m}_2$ einer zweiten Teilströmung durch die Messrohre des zweiten Oszillators, wobei die Summe der beiden Massedurchflussratenteilmesswerte einen Massedurchflussratengesamtmesswert ergibt;
   Erfassen (120) eines ersten Dichteteilmesswerts $\rho_1$ des Mediums in der ersten Teilströmung und eines zweiten Dichteteilmesswerts $\rho_2$ des Mediums in der zweiten Teilströmung; und
   **gekennzeichnet durch** das
   Berechnen (130) des effektiven Dichtemesswerts $\rho_{eff}$ in Abhängigkeit von den beiden Dichteteilmesswerten $\rho_1$, $\rho_2$ mit von den Massedurchflussratenteilmesswerten $\dot{m}_1$, $\dot{m}_2$ abhängigen Gewichtungen,
   wobei in Abhängigkeit von den Massedurchflussratenteilmesswerten verschiedene Gewichtungsfunktionen zur Ermittlung der Gewichtungen eingesetzt werden.

2. Verfahren (100) nach Anspruch 1, wobei der effektive Dichtemesswert $\rho_{eff}$ mit mindestens einer ersten Gewichtungsfunktion der Dichteteilmesswerte berechnet wird (132), wenn ein Betrag des Massedurchflussratengesamtmesswerts kleiner als ein erster Grenzwert (L1) ist (131).

3. Verfahren nach Anspruch 2, wobei die erste Gewichtungsfunktion (G1) einen arithmetischen Mittelwert des ersten Dichteteilmesswerts $\rho_1$ und des zweiten Dichteteilmesswerts $\rho_2$ umfasst.

4. Verfahren nach einem der vorhergehenden Ansprüche, wobei der effektive Dichtemesswert $\rho_{eff}$ mit mindestens einer zweiten Gewichtungsfunktion (G2) der Dichteteilmesswerte $\rho_1$, $\rho_2$ berechnet wird (134), wenn nur ein Massedurchflussratenteilmesswert kleiner als ein zweiter Grenzwert (L2) ist (133).

5. Verfahren (100) nach Anspruch 4, wobei der zweite Grenzwert (L2) kleiner als der erste Grenzwert (L1) ist.

6. Verfahren (100) nach Anspruch 4, wobei der zweite Grenzwert (L2) nicht mehr als die Hälfte des ersten Grenzwerts (L1) beträgt.

7. Verfahren (100) nach einem der Ansprüche 4 bis 6, wobei die zweite Gewichtungsfunktion (G2) den zum größeren Massedurchflussratenteilmesswert gehörigen Dichteteilmesswert mit x gewichtet und den kleineren der beiden Dichteteilmesswerte mit 1-x, wobei x > 2/3, insbesondere x > 3/4.

8. Verfahren (100) nach Anspruch 7, wobei x = 1.

9. Verfahren (100) nach Anspruch 2 und nach einem der Ansprüche 4 bis 8, wobei der effektive Dichtemesswert $\rho_{eff}$ mit einer dritten Gewichtungsfunktion (G3) berechnet wird (135), wenn der Betrag des Massedurchflussratengesamtmesswerts nicht kleiner als der erste Grenzwert (L1) ist, und wenn keiner der Massedurchflussratenteilmesswerte kleiner als der zweite Grenzwert (L2) ist.

10. Verfahren (100) nach Anspruch 9, wobei der mit der dritten Gewichtungsfunktion (G3) berechnete effektive Dichtemesswert $\rho_{eff}$ gleich einem Standarddichtewert $\rho_{standard}$ ist, wobei der Standarddichtewert $\rho_{standard}$ zu berechnen ist gemäß:

$$\rho_{standard} = \frac{\dot{m}_1 + \dot{m}_2}{\dfrac{\dot{m}_1}{\rho_1} + \dfrac{\dot{m}_2}{\rho_2}}$$

11. Verfahren (100) nach Anspruch 1, wobei die dichteabhängige Messgröße eine Volumendurchflussrate v umfasst, die berechnet wird gemäß (140):

$$\dot{V} = \frac{\dot{m}}{\rho_{eff}},$$

wobei $\dot{m}$ der Massedurchflussratengesamtmess-

wert die Summe der beiden Massendurchflussraten-teilmesswerte $\dot{m}_1$, $\dot{m}_2$ umfasst.

12. Coriolis-Massedurchflussmessgerät (1), umfassend:

eine Mess- und Betriebsschaltung (44);und zwei Oszillatoren (12, 22) die jeweils zwei Messrohre aufweisen, wobei die Messrohre der beiden Oszillatoren (12, 22) jeweils paarweise gegeneinander schwingen, wobei die vier Messrohre strömungstechnisch parallel angeordnet sind und einlaufseitig sowie auslaufseitig in einem Sammler (32, 34) zusammengefasst sind, wobei die Oszillatoren (12, 22) jeweils mindestens zwei Schwingungssensoren (16, 18, 26, 28) zum Erfassen von Schwingungen der Messrohre und einen Erreger (14, 24) zum Anregen der Schwingungen aufweisen; wobei die Mess- und Betriebsschaltung (44) dazu eingerichtet ist, die Erreger (14, 24) zu treiben, Signale der Schwingungssensoren zu erfassen (16, 18, 26, 28), und das Verfahren nach einem der Ansprüche 1 bis 11 durchzuführen.

**Claims**

1. A method (100) for determining a measured value of at least one measured variable, which is selected from a group of measured variables that comprises an effective measured density value $\rho_{eff}$ and a density-dependent measured variable of a flowing medium using Coriolis mass flow meter with two oscillators, each of which exhibits two measuring pipes, wherein the measuring pipes of the two oscillators each vibrate against one another in pairs, wherein the four measuring pipes are arranged in parallel in terms of flow and are each arranged in a collector on both the inlet and outlet side, wherein the method exhibits the following steps:

Recording (110) a first measured partial mass flow rate value $m_1$ of a first partial flow through the measuring pipes of the first oscillator and a second measured partial mass flow rate value $m_2$ of a second partial flow through the measuring pipes of the second oscillator, wherein the sum of the two measured partial mass flow rate values results in a total measured mass flow rate value;
Recording (120) a first measured partial density value $\rho_1$ of the medium in the first partial flow and a second measured partial density value $\rho_2$ of the medium in the second partial flow; and characterized through calculation (130) of the effective measured density value $\rho_{eff}$ on the basis of the two measured

partial density values $\rho_1$, $\rho_2$ with weightings that are dependent on the measured partial mass flow rate values $m_1$, $m_2$,
wherein various weighting functions are used to determine the weightings on the basis of the measured partial mass flow rate values.

2. A method (100) according to claim 1, wherein the effective measured density value $\rho_{eff}$ is calculated with at least one first weighting function of the measured partial density values (132) if the total measured mass flow rate value is less than a first limit value (L1) (131).

3. A method according to claim 2, wherein the first weighting function (G1) comprises an arithmetic mean of the first measured partial density value $\rho_1$ and of the second measured partial density value $\rho_2$.

4. A method according to one of the preceding claims, wherein the effective measured density value $\rho_{eff}$ is calculated with at least one second weighting function (G2) of the measured partial density values $\rho_1$, $\rho_2$ (134) if only one measured partial mass flow rate value is lower than a second limit value (L2) (133).

5. A method (100) according to claim 4, wherein the second limit value (L2) is lower than the first limit value (L1).

6. A method (100) according to claim 4, wherein the second limit value (L2) is no more than half of the first limit value (L1).

7. A method (100) according to one of the claims 4 to 6, wherein the second weighting function (G2) is used to weight the measured partial density value belonging to the higher measured partial mass flow rate value as x and the smaller of the two measured partial density values as 1-x, wherein x > 2/3, in particular x > 3/4.

8. A method (100) according to claim 7, wherein x = 1.

9. A method (100) according to claim 2 and according to one of the claims 4 to 8, wherein the effective measured density value $\rho_{eff}$ is calculated (135)with a third weighting function (G3) if the total measured mass flow rate value is not lower than the first limit value (L1) and if none of the measured partial mass flow rate values is lower than the second limit value (L2).

10. A method (100) according to claim 9, wherein the effective measured density value $\rho_{eff}$ calculated with the third weighting function (G3) equals a standard density value $\rho_{standard}$, wherein the standard density value $\rho_{standard}$ is to be calculated according to:

$$\rho_{standard} = \cfrac{m_1 + m_2}{\cfrac{m_1}{\rho_1} + \cfrac{m_2}{\rho_2}}$$

11. A method (100) according to claim 1, wherein the density-dependent measured variable comprises a volumetric flow rate v, which is calculated according to (140):

$$V = \frac{m}{\rho_{eff}}$$

wherein the total measured mass flow rate value m represents the sum of the two measured partial mass flow rate values $m_1$, $m_2$.

12. A Coriolis mass flow meter (1), comprising: one measuring and operating circuit (44); and two oscillators (12, 22), each of which exhibits two measuring pipes, wherein the measuring pipes of the two oscillators (12, 22) are arranged in pairs that vibrate against one another, wherein the four measuring pipes are aligned in parallel in terms of flow and are each arranged in a collector (32, 34) on both the inlet and outlet side, wherein the oscillators (12, 22) each exhibit at least two vibration sensors (16, 18, 26, 28) for recording vibrations of the measuring pipes and one exciter (14, 24) for exciting the vibrations; wherein the measuring and operating circuit (44) is configured to drive the exciters (14, 24), record signals of the vibration sensors (16, 18, 26, 28), and implement the method according to one of the claims 1 to 11.

**Revendications**

1. Procédé (100) destiné à la détermination d'une valeur mesurée d'au moins une grandeur de mesure, laquelle grandeur est choisie à partir d'un groupe de grandeurs de mesure comprenant une valeur mesurée de densité effective $\rho_{eff}$, et une grandeur de mesure dépendant de la densité d'un produit en écoulement, au moyen d'un débitmètre massique Coriolis avec deux oscillateurs qui présentent chacun deux tubes de mesure, les tubes de mesure des deux oscillateurs vibrant respectivement par paires l'un par rapport à l'autre, les quatre tubes de mesure étant disposés parallèlement en terme d'écoulement et étant respectivement regroupés dans un collecteur côté entrée ainsi que côté sortie, lequel procédé présente les étapes suivantes :

Acquisition (110) d'une première valeur mesurée de débit massique partielle $m_1$ d'un premier écoulement partiel à travers les tubes de mesure du premier oscillateur et d'une deuxième valeur mesurée de débit massique partielle $m_2$ d'un deuxième écoulement partiel à travers les tubes de mesure du deuxième oscillateur, la somme des deux valeurs mesurées de débit massique partielles donnant une valeur mesurée de débit massique totale ;
Acquisition (120) d'une première valeur mesurée de densité partielle $\rho_1$ du produit dans le premier écoulement partiel et d'une deuxième valeur mesurée de densité partielle $\rho_2$ du produit dans le deuxième écoulement partiel ; et lequel procédé est **caractérisé par** l'étape suivante :
Calcul (130) de la valeur mesurée de densité effective $\rho_{eff}$ en fonction des deux valeurs mesurées de densité partielles pi, $\rho_2$ avec des pondérations dépendant des valeurs mesurées de débit massique partielles $m_1$, $m_2$, différentes fonctions de pondération étant utilisées pour déterminer les pondérations en fonction des valeurs mesurées de débit massique partielles.

2. Procédé (100) selon la revendication 1, pour lequel la valeur mesurée de densité effective $\rho_{eff}$ est calculée (132) avec au moins une première fonction de pondération des valeurs mesurées de densité partielles lorsqu'un montant de la valeur mesurée de débit massique totale est inférieur à une première valeur limite (L1) (131).

3. Procédé (100) selon la revendication 2, pour lequel la première fonction de pondération (G1) comprend une moyenne arithmétique de la première valeur mesurée de densité partielle $\rho_1$ et de la deuxième valeur mesurée de densité partielle $\rho_2$.

4. Procédé (100) selon l'une des revendications précédentes, pour lequel la valeur mesurée de densité effective $\rho_{eff}$ est calculée (134) avec au moins une deuxième fonction de pondération (G2) des valeurs mesurées de densité partielles $\rho_1$, $\rho_2$ lorsqu'une seule valeur mesurée de débit massique partielle est inférieure à une deuxième valeur limite (L2) (133).

5. Procédé (100) selon la revendication 4, pour lequel la deuxième valeur limite (L2) est inférieure à la première valeur limite (L1).

6. Procédé (100) selon la revendication 4, pour lequel la deuxième valeur limite (L2) n'est pas supérieure à la moitié de la première valeur limite (L1).

7. Procédé (100) selon l'une des revendications 4 à 6, pour lequel la deuxième fonction de pondération (G2) pondère la valeur mesurée de densité partielle appartenant à la valeur mesurée de débit massique partielle la plus grande par x et la plus petite des deux valeurs mesurées de densité partielles par 1-x, avec x > 2/3, notamment x > 3/4.

8. Procédé (100) selon la revendication 7, pour lequel x = 1.

9. Procédé (100) selon la revendication 2 et selon l'une des revendications 4 à 8, pour lequel la valeur mesurée de densité effective $\rho_{eff}$ est calculée (135) avec une troisième fonction de pondération (G3) si la valeur absolue de la valeur mesurée de débit massique totale n'est pas inférieure à la première valeur limite (L1) et si aucune des valeurs mesurées de débit massique partielles n'est inférieure à la deuxième valeur limite (L2).

10. Procédé (100) selon la revendication 9, pour lequel la valeur mesurée de densité effective $\rho_{eff}$ calculée avec la troisième fonction de pondération (G3) est égale à une valeur de densité standard $\rho_{standard}$, la valeur de densité standard $\rho_{standard}$ devant être calculée selon la formule suivante :

$$\rho_{standard} = \frac{\dot{m}_1 + \dot{m}_2}{\frac{\dot{m}_1}{\rho_1} + \frac{\dot{m}_2}{\rho_2}}$$

11. Procédé (100) selon la revendication 1, pour lequel la grandeur de mesure dépendant de la densité comprend un débit volumique v, lequel est calculé (140) selon la formule suivante :

$$\dot{V} = \frac{\dot{m}}{\rho_{eff}},$$

m étant la valeur mesurée de débit massique totale et comprenant la somme des deux valeurs mesurées de débit massique partielles m1, m2.

12. Débitmètre Coriolis (1), comprenant :

un circuit de mesure et de fonctionnement (44) ; et
deux oscillateurs (12, 22) présentant chacun deux tubes de mesure, les tubes de mesure des deux oscillateurs (12, 22) vibrant respectivement par paires l'un par rapport à l'autre, les quatre tubes de mesure étant disposés parallèlement en termes d'écoulement et étant réunis dans un collecteur (32, 34) côté entrée ainsi que côté sortie, les oscillateurs (12, 22) présentant chacun au moins deux capteurs de vibrations (16, 18, 26, 28) destinés à mesurer les vibrations des tubes de mesure et un excitateur (14, 24) destiné à générer les vibrations ; le circuit de mesure et de fonctionnement (44) étant conçu pour entraîner les excitateurs (14, 24), pour détecter des signaux des capteurs de vibrations (16, 18, 26, 28), et pour mettre en oeuvre le procédé selon l'une quelconque des revendications 1 à 11.

Fig. 1

Fig. 2b

Fig. 2a

**IN DER BESCHREIBUNG AUFGEFÜHRTE DOKUMENTE**

**In der Beschreibung aufgeführte Patentdokumente**

- DE 69314780 T2
- DE 102016112002 A1